# FASCICULE DE BREVET EUROPEEN

(11) **EP 4 173 250 B1**
(45) Date de publication et mention de la délivrance du brevet: **06.08.2025**
(21) Numéro de dépôt: 21739164.8
(22) Date de dépôt: 14.06.2021
(51) Int. Cl.: H04L 9/40, H04W 12/122

(54) **PROCÉDÉ ET DISPOSITIF DE DÉTECTION D'UNE FAILLE DE SÉCURITÉ**
VERFAHREN UND VORRICHTUNG ZUR ERKENNUNG EINES SICHERHEITSDEFEKTS
METHOD AND DEVICE FOR DETECTING A SECURITY FLAW

(30) Priorité: 26.06.2020 FR 2006715
(43) Date de publication de la demande: 03.05.2023
(73) Titulaire: Orange, 92130 Issy-les-Moulineaux (FR)
(72) Inventeur: BOUVET, Eric, 92326 CHATILLON (FR); FONTAINE, Fabrice, 92326 CHATILLON (FR)
(86) Numéro de dépôt international: PCT/FR2021/051060
(87) Numéro de publication internationale: WO 2021/260289

(56) Documents cités:
- WO-A1-2012/057737
- RU-U1- 111 325
- US-A1- 2016 112 870

## Description

### Technique antérieure

L'invention se rapporte au domaine général des télécommunications. Elle concerne plus particulièrement la détection d'une faille de sécurité qui permet à un terminal non autorisé d'obtenir frauduleusement une donnée sensible.

A titre d'exemple, la donnée sensible peut être un mot de passe pour se connecter à un équipement de terminaison de réseau, un tel équipement connu en France sous le nom de « box », tel qu'un équipement LiveBox (produit commercialisé d'Orange, marque déposée) offrant de multiples services. Un terminal peut se connecter à l'équipement de terminaison de réseau en utilisant le mot de passe pour pouvoir bénéficier d'un service tel qu'un service de connexion Internet.

Pour éviter que le mot de passe ne soit divulgué de façon non sécurisée, on connait une solution qui consiste à permettre aux terminaux de ne se connecter à l'équipement de terminaison de réseau qu'après une saisie manuelle du mot de passe. Cependant, cette solution requiert que l'utilisateur saisisse le mot de passe manuellement pour chaque nouveau terminal qu'il souhaite connecter, ce qui est fastidieux surtout lorsque le mot de passe est long.

On connait une solution permettant d'améliorer l'expérience de l'utilisateur, nommée WPS (pour "Wi-Fi Protected Setup" en anglais), qui consiste à configurer l'équipement de terminaison de réseau pour qu'il accepte toutes les demandes de connexion de terminaux reçues durant un certain intervalle de temps sans utiliser de mot de passe, par exemple pendant deux minutes à compter d'un appui sur un bouton activant la fonctionnalité WPS. Cette solution présente cependant une faille de sécurité: un terminal malveillant peut se connecter à la place de l'équipement légitime lorsque la fonctionnalité WPS est activée.

On connait une solution qui permet de sécuriser la communication du mot de passe tout en améliorant l'expérience de l'utilisateur. Cette solution consiste à utiliser un protocole spécifique sur un terminal déjà appairé sur l'équipement de terminaison de réseau, pour diffuser automatiquement le mot de passe aux nouveaux terminaux qui souhaitent se connecter à l'équipement. Par exemple, le terminal déjà connecté, peut envoyer à un nouveau terminal via un réseau BLE (BLE pour « Bluetooth Low Energy » en anglais) le mot de passe qui permettra au nouveau terminal de se connecter à un réseau WiFi couvert par l'équipement de terminaison de réseau. L'utilisateur n'est pas obligé de saisir manuellement le mot de passe pour les nouveaux terminaux, mais uniquement pour le premier terminal. De plus, cette solution est plus sécurisée que la fonctionnalité WPS car elle requiert que le nouveau terminal se connecte d'abord au premier terminal via le réseau BLE.
Cependant, même cette dernière solution présente une faille de sécurité: un terminal malveillant peut intercepter les communications BLE entre le premier terminal et le nouveau terminal, et récupérer ensuite le mot de passe de l'équipement de terminaison de réseau.
Il existe donc un besoin en une solution permettant de détecter une faille de sécurité permettant à un terminal malveillant de récupérer une donnée sensible, tel qu'un mot de passe.
On connait par ailleurs les documents RU-111325U1 et WO2012057737A1 qui portent sur la détection de perte de paquets ainsi que le documents US2016112870A1 qui porte sur la connexion de terminaux à un réseau.

### Exposé de l'invention

L'invention vise un procédé de détection d'une faille de sécurité selon la revendication 1. Corrélativement, l'invention vise un dispositif de détection d'une faille de sécurité selon la revendication 12.

Les caractéristiques et avantages du procédé de détection d'une faille de sécurité selon l'invention présentés ci-après s'appliquent de la même façon au dispositif de détection selon l'invention et vice versa.

Le premier terminal est connu par le dispositif de détection signifie qu'un identifiant du premier terminal est enregistré dans une mémoire accessible par le dispositif. Le fait que l'identifiant soit mémorisé permet au dispositif d'identifier et surveiller les messages notamment transmis par ce premier terminal.

En particulier, le premier terminal peut être ou avoir été connecté et appairé sur le dispositif. Le premier terminal peut avoir été connecté au dispositif de détection sous un contrôle par un utilisateur du dispositif, par exemple suite à une entrée manuelle par l'utilisateur d'un mot de passe de connexion, ou suite à une authentification du premier terminal auprès du dispositif de détection. Si le premier dispositif est une passerelle de réseau, le terminal fait dans ce cas partie du réseau.

Le premier terminal peut obtenir la donnée sensible d'une façon autorisée.

La technique proposée permet de détecter les vulnérabilités et les failles de sécurité sur lesquelles un terminal malveillant peut s'appuyer pour intercepter les messages entre le premier terminal et l'autre terminal et obtenir la donnée sensible. La technique proposée permet donc d'améliorer la sécurité du réseau de communication comportant le dispositif de détection et le premier terminal.

Le dispositif de détection proposé n'a pas besoin de déchiffrer les messages analysés. Si le premier terminal communique la donnée sensible à l'autre terminal de façon chiffrée, le dispositif de détection proposé ne détecte pas la donnée sensible en clair dans les messages analysés et ne détecte alors pas de faille de sécurité.

L'expérience d'un utilisateur du dispositif de détection ou d'un utilisateur du premier terminal n'est pas impactée par la mise en œuvre du procédé conforme à l'invention.

Dans un mode de réalisation particulier, le procédé proposé comprend en outre:
- une étape de surveillance des destinations des messages envoyés par le premier terminal ;
- une étape de détection que la destination d'un dit message envoyé est un terminal non connu par le dispositif, dit « nouveau terminal » ;
l'étape d'analyse des messages étant mise en œuvre sur la dite détection et uniquement pour les messages envoyés au nouveau terminal.

Selon ce mode de réalisation, le dispositif de détection proposé comporte en outre :
- un module de surveillance configuré pour surveiller les destinations des messages envoyés par le premier terminal ; et
- un module de détection de nouveaux terminaux configuré pour détecter que la destination d'un message envoyé est un terminal non connu par le dispositif, dit « nouveau terminal » ; le module d'analyse étant configuré pour n'analyser que les messages envoyés au nouveau terminal, sur ladite détection.

Selon ce mode de réalisation, le dispositif de détection d'une faille de sécurité surveille les destinations des messages envoyés par le premier terminal pour pouvoir déterminer si un nouveau terminal vient de se connecter au premier terminal, mais le dispositif de détection n'a pas besoin d'analyser les contenus des messages échangés entre les premiers terminaux déjà connus par le dispositif. Le dispositif de détection d'une faille de sécurité n'analyse les contenus des messages qu'au moment opportun, c'est-à-dire sur détection de la communication entre le nouveau terminal et le premier terminal.

Le dispositif de détection proposé peut surveiller et analyser des communications du premier terminal qui reposent sur des technologies différentes, par exemple des communications filaires, des communications WiFi (pour « Wireless Fidelity » en anglais), Bluetooth, BLE, Thread, Zigbee (IEEE 802.15.4), Z-Wave, DECT (« Digital Enhanced Cordless Telecommunications » en anglais) et/ou DECT ULE (pour « DECT Ultra Low Energy» en anglais).

La technologie de connexion du premier terminal au dispositif de détection peut être différente de la technologie de connexion du premier terminal à l'autre terminal (le destinataire du message). Par exemple, la connexion entre le premier terminal et le dispositif de détection peut reposer sur un réseau de type WiFi, alors que la connexion entre le premier et l'autre terminal repose sur l'un des protocoles Bluetooth, Thread, Zigbee, Z-Wave, DECT ou DECT ULE. En particulier, la connexion entre les terminaux peut se baser sur un mode de connexion non sécurisée de la norme Bluetooth, par exemple le mode « BLE Just Works ».

Dans un mode de réalisation particulier, l'étape de surveillance comporte une surveillance des messages envoyés sur l'ensemble des canaux de communication utilisés par le premier terminal, quelle que soit la technologie auquel un canal est conforme.

Dans un mode de réalisation particulier, l'étape de surveillance comporte une écoute de canaux de type "advertising" selon la norme Bluetooth. Une telle écoute permet de connaitre l'émetteur et le récepteur d'un message et de pouvoir ainsi déterminer si le message est transmis à un nouveau terminal.

L'invention vise également un équipement comportant un dispositif conforme à l'invention tel que décrit précédemment, dans lequel l'équipement est un équipement de terminaison de réseau, un extendeur de couverture d'un réseau de communication sans fil, un serveur de données sensibles, ou un équipement d'un utilisateur.

Dans un mode de réalisation particulier, le dispositif de détection selon l'invention est une passerelle entre un réseau local et un réseau étendu tel qu'Internet. En particulier, le dispositif de détection peut être un équipement de terminaison de réseau (box). Dans ce mode de réalisation, la donnée sensible peut être au moins un mot de passe permettant à un terminal du réseau local de se connecter à la passerelle et ainsi se connecter au réseau étendu. Alternativement, la donnée sensible peut être un document de santé ou d'identité d'un utilisateur.

Dans un mode de réalisation particulier, le dispositif de détection selon l'invention est un extendeur de couverture d'un réseau de communication sans fil, par exemple un extendeur WiFi ou un extendeur DECT ULE. La donnée sensible est un mot de passe permettant à un terminal de se connecter à l'extendeur pour bénéficier de la couverture du réseau sans fil.

Dans un mode de réalisation particulier, le dispositif de détection selon l'invention est un serveur mémorisant des données sensibles comportant des informations personnelles d'un utilisateur du serveur, par exemple une information d'un document d'identité par exemple d'un passeport ou autre document personnel, une information sur un moyen de paiement tel qu'un numéro ou un code d'une carte bancaire, ou une information d'un document de santé de l'utilisateur.

En particulier, le dispositif de détection peut être un équipement utilisateur tel qu'un ordinateur, un smartphone, ou une tablette.

D'autres types de dispositifs de détection et de données sensibles sont envisageables. Les exemples d'application du procédé et du dispositif de détection d'une faille de sécurité présentés ci-dessus ne sont pas limitatifs.

Dans un mode de réalisation particulier, l'étape d'analyse des messages envoyés par le premier terminal est mise en œuvre pour une durée déterminée comptée à partir de la détection du premier message émis par le premier terminal à l'autre terminal. Selon ce mode, le dispositif de détection considère qu'à l'expiration de cette durée le premier terminal n'enverra pas la donnée sensible à l'autre terminal et donc que le risque qu'une faille de sécurité se présente est faible. En particulier, lorsque la donnée sensible est un mot de passe pour se connecter au dispositif, il est courant que l'autre terminal demande ce mot de passe au début de sa communication avec le premier terminal.

Dans un mode de réalisation particulier, lorsque l'autre terminal est un nouveau terminal, l'étape d'analyse comporte en outre l'analyse des contenus des messages envoyés par le nouveau terminal au premier terminal. Ce mode permet au dispositif proposé de détecter une demande d'envoi de la donnée sensible et ainsi de mettre en œuvre une contremesure anticipée, avant même que le premier terminal réponde à la demande et envoie la donnée sensible.

Dans un mode de réalisation, le dispositif proposé détecte que la destination d'un message envoyé est un terminal non connu par le dispositif (un nouveau terminal) sur la base de l'adresse physique MAC (pour « Media Access Control » en anglais) du nouveau terminal ou en se basant sur d'autres informations si l'adresse MAC est aléatoire, par exemple sur un algorithme de changement de fréquence utilisé par le nouveau terminal ou sur une force d'un signal émis par le nouveau terminal. Dans ce mode, le dispositif de détection compare les caractéristiques d'un terminal destinataire d'un message envoyé par le premier terminal avec les données mémorisées ; s'il ne les trouve pas dans sa mémoire il détermine qu'il s'agit d'un nouveau terminal. En particulier, le dispositif peut avoir accès à une mémoire enregistrant les adresses MAC, les algorithmes de changement de fréquence et/ou les forces d'émission des terminaux connus par le dispositif.

Dans un mode de réalisation, le procédé proposé comporte en outre une étape de détermination d'au moins une caractéristique de l'autre terminal, l'étape d'analyse des messages envoyés par le premier terminal à l'autre terminal étant conditionnée par cette caractéristique. La caractéristique peut être un fabriquant de l'autre terminal, un identifiant unique UUID (pour «Universally Unique Identifier » en anglais) d'un service utilisé par l'autre terminal, et/ou un préfixe d'un nom de l'autre terminal.

En particulier, le dispositif de détection proposé peut déterminer un fabricant, un type ou un modèle du nouveau terminal à partir de son adresse physique MAC. Le dispositif proposé peut obtenir l'adresse MAC à partir du message surveillé. Un identifiant UUID peut être déterminé à partir d'un champ d'un paquet de type « Bluetooth advertising » émis par l'autre terminal ou à partir d'une signature émise par l'autre terminal sur une onde radio donnée. Le nom ou un préfixe du nom de l'autre terminal peut être déterminé à partir d'un identifiant Bluetooth de type « org.bluetooth.characteristic.gap.device_name » ou d'un numéro assigné selon la spécification Bluetooth de type « 0x2a00 ».

Dans un mode de réalisation particulier, le dispositif de détection conforme à l'invention mémorise une liste de fabricants de terminaux et n'analyse les messages destinées à un terminal que si son fabricant est compris dans cette liste ou exclus de celle-ci.

Un utilisateur du dispositif détection peut alors configurer le dispositif pour indiquer des catégories de terminaux de confiance, par exemple les terminaux d'un fabricant donné.

Dans un mode de réalisation particulier, le dispositif de détection conforme à l'invention mémorise une liste de préfixes de noms de terminaux et n'analyse les messages destinés à un terminal que si son préfixe est compris dans cette liste ou exclus de celle-ci.

Dans un mode de réalisation particulier, le dispositif de détection conforme à l'invention mémorise une liste d'identifiants UUID et n'analyse les messages destinés à un terminal que s'il supporte un service dont l'identifiant UUID est compris dans cette liste ou exclus de celle-ci.

Dans un mode de réalisation particulier, si aucune faille de sécurité n'est détectée pour les messages analysés et destinés à un nouveau terminal, le dispositif de détection proposé enregistre un identifiant du nouveau terminal dans une mémoire comportant des identifiants de terminaux connus par le dispositif. Le dispositif ne reconsidère pas ce terminal en tant que nouveau terminal s'il détecte ultérieurement une de ses communications. Ce mode permet d'éviter l'analyse des messages destinés à des terminaux déjà connus par le dispositif et qui sont considérés comme fiables.

Dans un mode de réalisation, le dispositif de détection efface de sa mémoire l'identifiant d'un terminal si ce terminal est désappairé du dispositif de détection, ou sur une configuration par l'utilisateur du dispositif. Ce terminal pourrait ainsi être considéré ultérieurement en tant que nouveau terminal. Ce mode permet d'améliorer la détection des failles de sécurité ; en effet ce terminal peut être impliqué dans le futur dans une faille de sécurité.

Dans un mode de réalisation, le dispositif de détection proposé enregistre les messages envoyés par le premier terminal à un autre terminal pour les analyser ultérieurement et vérifier s'ils divulguent la donnée sensible. Nous rappelons que le dispositif proposé peut reconnaître et détecter la donnée sensible puisqu'il la détient. En particulier ces messages peuvent être enregistrés avec un horodatage pour restituer potentiellement à un utilisateur des informations sur les dates de présence d'une faille de sécurité.

Dans un autre mode de réalisation, le dispositif de détection vérifie en temps réel si les messages analysés comportent la donnée sensible, autrement dit il vérifie la présence ou non de la donnée sensible au fur et à mesure de la détection des messages. En particulier, le dispositif proposé peut notifier l'utilisateur d'une faille de sécurité en temps réel dès la première détection de la présence de la donnée sensible.

Dans un mode de réalisation particulier, le procédé de détection proposé comporte en outre, sur détection de la présence de la donnée sensible dans un message analysé, une étape de notification à un utilisateur du dispositif de la faille de sécurité détectée et d'un identifiant de l'autre terminal. L'utilisateur peut alors envisager, en fonction de l'identifiant de l'autre terminal et/ou de la nature de la donnée sensible, une action de contremesure pour éviter ou réduire l'impact de la faille de sécurité.

Dans un mode de réalisation particulier, le procédé de détection proposé comporte en outre, sur détection de la présence de la donnée sensible dans un message analysé, au moins une étape de contremesure qui peut être choisie parmi:
- une modification de la valeur de la donnée sensible ;
- un désappairage des terminaux qui se sont connectés au dispositif pendant une durée déterminée suivant la détection de la faille de sécurité ;
- un blocage de connexion avec le dispositif de tout terminal pendant une durée déterminée suivant la détection de la faille de sécurité ;
- un maintien de connexion seulement pour le terminal qui s'est connecté en premier lieu au dispositif après la détection de la faille de sécurité ; et
- un maintien de connexion seulement pour un terminal qui s'est connecté au dispositif pendant une durée déterminée après la détection de la faille de sécurité et qui a une adresse MAC identique à l'adresse MAC de l'autre terminal.

Ces étapes représentent des contre-mesures permettant d'éviter ou au moins de réduire le risque d'obtention de la donnée sensible par un terminal malveillant, et le risque d'utilisation de la donnée sensible par le terminal malveillant (s'il a réussi à l'obtenir) par exemple pour se connecter au dispositif de détection conforme à l'invention.

L'invention vise également un système de communication comportant un dispositif de détection conforme à l'invention et au moins un premier terminal connu par le dispositif.

L'invention vise également un programme d'ordinateur sur un support d'enregistrement, ce programme étant susceptible d'être mis en œuvre dans un ordinateur ou un dispositif, conforme à l'invention, de détection d'une faille de sécurité. Ce programme comporte des instructions adaptées à la mise en œuvre d'un procédé de détection d'une faille de sécurité par le dispositif de détection, tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, chaque support d'informations ou d'enregistrement peut être un circuit intégré dans lequel le programme est incorporé, le circuit étant adapté pour exécuter ou pour être utilisé dans l'exécution d'un procédé de détection d'une faille de sécurité conforme à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 illustre une architecture d'un réseau de communications dans lequel un procédé de détection proposé peut être mis en œuvre selon un mode de réalisation particulier, le réseau comportant un dispositif de détection proposé ;
[Fig. 2] la figure 2 est un organigramme représentant des étapes d'un procédé de détection proposé, mis en œuvre selon un mode de réalisation particulier ;
[Fig. 3] la figure 3 est un organigramme représentant des étapes d'un procédé de détection proposé, mis en œuvre selon un mode de réalisation particulier, suivies par des étapes de contremesure contre une faille de sécurité détectée ;
[Fig. 4] la figure 4 est un organigramme représentant des étapes d'un procédé de détection proposé, mis en œuvre selon un mode de réalisation particulier, suivies par des étapes de contremesure contre une faille de sécurité détectée ;
[Fig. 5] la figure 5 est un organigramme représentant des étapes d'un procédé de détection proposé, mis en œuvre selon un mode de réalisation particulier, suivies par des étapes de contremesure contre une faille de sécurité détectée ;
[Fig. 6] la figure 6 est un organigramme représentant des étapes d'un procédé de détection proposé, mis en œuvre selon un mode de réalisation particulier, suivies par des étapes de contremesure contre une faille de sécurité détectée ;
[Fig. 7] la figure 7 est un organigramme représentant des étapes d'un procédé de détection proposé, mis en œuvre selon un mode de réalisation particulier, suivies par des étapes de contremesure contre une faille de sécurité détectée ;
[Fig. 8] la figure 8 illustre une architecture fonctionnelle d'un dispositif de détection proposé, selon un mode de réalisation particulier ; et
[Fig. 9] la figure 9 présente une architecture matérielle d'un dispositif de détection proposé, selon un mode de réalisation particulier.

### Description des modes de réalisation

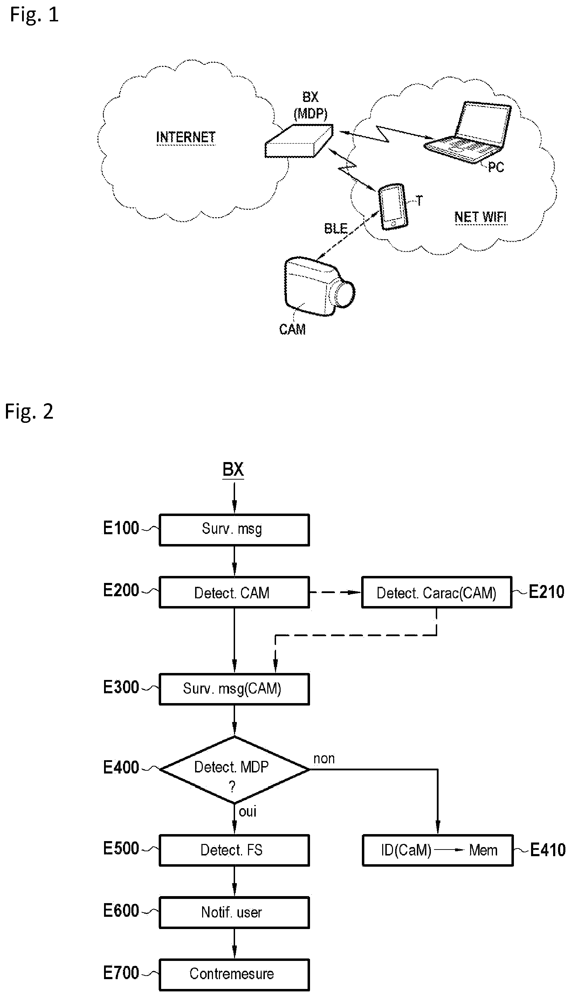

La **figure 1** illustre une architecture d'un réseau de communications comportant un dispositif de détection BX conforme à l'invention, selon un mode de réalisation particulier. Dans ce mode, le dispositif de détection BX est une passerelle entre un réseau local NET et un réseau étendu, par exemple Internet. En particulier, le dispositif BX peut être un équipement de terminaison de réseau (box). Le réseau local NET est un réseau WiFi. Outre la passerelle BX, le réseau NET comporte un terminal PC et un terminal T connectés en WiFi à la passerelle BX.

Dans l'exemple décrit ici, le terminal PC est un ordinateur apte à communiquer selon la norme WiFi. Le terminal T est un téléphone de type smartphone apte à communiquer selon les normes WiFi et Bluetooth. Les terminaux PC et T se sont connectés à la passerelle BX en utilisant un mot de passe MDP de la passerelle BX. Le mot de passe peut avoir été saisi manuellement par un utilisateur sur les terminaux PC et T.

Un autre terminal CAM essaie de joindre le réseau WiFi NET et se connecter à la passerelle BX pour bénéficier d'un accès à Internet. Pour cela, le terminal CAM se connecte selon la norme Bluetooth au terminal T et lui demande le mot de passe MDP. Dans l'exemple décrit ici, le terminal CAM est une caméra dotée d'un module de communication qui supporte les normes WiFi et Bluetooth.

La passerelle BX détient le mot de passe MDP. Ce mot de passe MDP est une donnée sensible au sens de la présente invention. La passerelle BX mémorise des identifiants des terminaux PC et T connus par celle-ci, par exemple leurs adresses MAC. Ces terminaux PC et T forment des premiers terminaux au sens de l'invention

La **figure** 2 est un organigramme représentant des étapes d'un procédé de détection d'une faille de sécurité, conforme à l'invention, mis en œuvre selon un mode de réalisation particulier par le dispositif de détection BX décrit en référence à la figure 1.

Au cours d'une étape E100, le dispositif (passerelle) BX surveille les destinations des messages envoyés par les terminaux T et PC. Le dispositif BX n'analyse pas les contenus de ces messages mais seulement l'identité de leurs destinations pour pouvoir détecter un éventuel message envoyé à un nouveau terminal, non connu par le dispositif BX.

Le dispositif BX peut surveiller des messages sur des canaux de communication de différentes technologies, par exemple des canaux de communication WiFi pour le terminal PC et des canaux de communications WiFi et Bluetooth pour le terminal T.

Au cours d'une étape E200, le dispositif BX détecte qu'un message surveillé est envoyé par le premier terminal T au terminal CAM. La caméra CAM n'est pas appairée au dispositif BX. Comme aucun identifiant du terminal CAM n'est enregistré dans la mémoire du dispositif BX, le dispositif considère que ce terminal CAM est un nouveau terminal. Si la communication entre le premier terminal T et le nouveau terminal CAM n'est pas conforme à un protocole de communication sécurisé, cette communication peut représenter une éventuelle faille de sécurité sur laquelle un terminal malveillant peut s'appuyer pour obtenir la donnée sensible MDP.

Dans le mode décrit ici, le dispositif BX mémorise des caractéristiques des terminaux qu'il connait, par exemple leurs adresses MAC, leurs algorithmes de changement de fréquence et/ou la force d'émission de leurs signaux. Nous supposons que les messages envoyés par le premier terminal T comportent les adresses MAC de leurs destinataires. Le dispositif BX se base sur l'adresse physique MAC du terminal CAM pour déterminer qu'il est nouveau. Alternativement, le dispositif BX peut se baser sur d'autres caractéristiques du terminal CAM tel qu'un algorithme de changement de fréquence utilisé par le terminal CAM ou une force d'un signal émis par le terminal CAM, à condition que les caractéristiques du terminal détecté CAM ne soient pas déjà mémorisées par le dispositif BX. Dans cet exemple, le procédé proposé comporte une étape optionnelle E210 (représentée en pointillés sur la figure 2) pour déterminer une caractéristique du nouveau terminal CAM.

Sur la détection E200 que le message surveillé est destiné au nouveau terminal CAM, le dispositif de détection BX analyse au cours d'une étape E300 tous les messages envoyés par le premier terminal au nouveau terminal CAM, pendant une durée déterminée à compter de la détection E200. Au cours de cette étape E300, le dispositif BX analyse les contenus des messages envoyés au nouveau terminal pour pouvoir détecter éventuellement une émission en clair (sans cryptage ou chiffrement) du mot de passe MDP.

Au cours de l'étape d'analyse E300, le dispositif BX suit les sauts de fréquence des échanges Bluetooth entre les terminaux T et CAM. Dans le mode décrit ici, le dispositif BX utilise une trame de type « CONNECT_REQ » qui est envoyée en clair sur un canal de type « advertising ». Cette trame contient toutes les informations nécessaires pour suivre une future communication entre les terminaux T et CAM, telles qu'une taille de la fenêtre de communication (« Window Size »), un programme de canaux (« Channel Map »), une durée de temps avant le premier saut de fréquence (« Window Offset ») et un intervalle de temps entre deux sauts successifs. D'autres méthodes d'analyse des contenus des messages selon l'état de la technique sont envisageables en fonction de la technologie de communication entre le premier terminal T et le nouveau terminal CAM, par exemple Bluetooth, WiFi, Thread, Zigbee, Z-Wave, DECT ou DECT ULE.

L'étape d'analyse E300 peut être mise en œuvre pour une durée suffisante à un utilisateur du dispositif de détection BX pour appairer le nouveau terminal CAM, par exemple de 15 à 30 minutes. En particulier, la durée d'analyse peut être déterminée en fonction d'une caractéristique du nouveau terminal qui a été déterminée au cours de l'étape E210, par exemple son fabricant, son modèle et/ou son type.

Au cours d'une étape E400, le dispositif BX vérifie si la donnée sensible MDP est présente dans au moins un message analysé. L'étape E400 peut être mise en œuvre au fur et à mesure de l'analyse E300. Alternativement, le dispositif BX peut enregistrer les contenus analysés (E300) des messages, puis détecter (E400) ou pas la présence de la donnée sensible MDP dans ces messages.

Supposant qu'au cours de l'étape E400 le dispositif BX détecte la présence de la donnée sensible MDP dans l'un des messages analysés, il détermine alors au cours d'une étape E500 la présence d'une faille de sécurité FS.

Suite à la détection E500 de la faille de sécurité, le dispositif BX peut notifier un utilisateur de cette faille FS au cours d'une étape E600. En particulier, le dispositif BX peut restituer pour l'utilisateur la nature de la donnée sensible MDP et un identifiant ou une caractéristique du nouveau terminal CAM, tel que son adresse MAC, son fabricant et/ou son modèle.

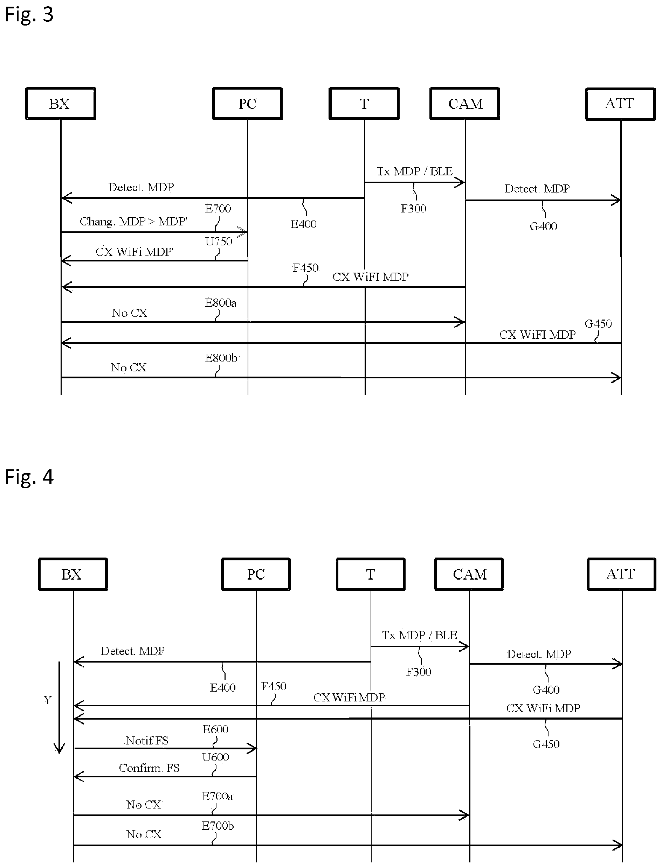

En option, le dispositif BX peut mettre en œuvre au cours d'une étape E700, une contremesure à la faille de sécurité détectée FS. Des exemples de contremesures E700 sont décrits ci-après en référence aux figures 3 à 7.

Si à la fin de la durée d'analyse E300, le dispositif BX ne détecte (E400) aucune présence d'une donnée sensible dans les messages analysés, il mémorise au cours de l'étape E410 un identifiant du nouveau terminal CAM, par exemple son adresse physique MAC, dans une mémoire enregistrant les identifiants des terminaux T et PC déjà connus par le dispositif BX. Ainsi, le terminal CAM devient connu par le dispositif BX et ne sera plus considéré comme un nouveau terminal, mais éventuellement comme un premier terminal.

Si le premier terminal T envoie le mot de passe MDP dans un message de façon chiffrée au nouveau terminal CAM, lorsque le dispositif BX analyse ce message, il détermine qu'il est chiffré et ne détecte pas alors de faille de sécurité. Effectivement, un autre terminal qui intercepte les échanges Bluetooth entre les terminaux T et CAM ne pourra pas récupérer le mot de passe MDP car il ne saura pas déchiffrer le message comportant le mot de passe.

Dans un mode de réalisation, le dispositif BX détermine au cours de l'étape E210 au moins une caractéristique du nouveau terminal CAM parmi son fabricant, un préfixe de son nom et un identifiant UUID d'un service qu'il supporte. Le dispositif BX mémorise une liste de fabricants, de préfixes de noms de terminaux et/ou d'identifiant UUID. Le dispositif ne met en œuvre l'étape d'analyse E300 que si la caractéristique déterminée (E210) du nouveau terminal CAM est comprise dans la liste ou exclue de celle-ci.

Par exemple, le dispositif de détection proposé peut mémoriser des identifiants des fabricants D-Link et Awox (marques déposées) qui commercialisent des objets connectés. Selon un autre exemple, la liste peut comprendre le préfixe « DCS-» associé à la caractéristique org.bluetooth.characteristic.gap.device_name des objets connectés de la marque D-Link. Selon un autre exemple, la liste peut comporter l'identifiant UUID 0xd001 qui correspond à un service utilisé par des objets connectés de la marque D-Link pour envoyer une configuration de connexion WiFi.

La **figure** 3 est un organigramme représentant des étapes d'un procédé de détection proposé, mis en œuvre selon un mode de réalisation particulier, suivies par des étapes de contremesure contre une faille de sécurité FS détectée. Le procédé de détection est mis en œuvre par le dispositif (passerelle) BX décrit en référence aux figures 1 et 2. Nous supposons ici que le dispositif BX a déjà mis en œuvre les étapes de surveillance des messages E100 et de détection E200 d'une communication impliquant le nouveau terminal CAM.

Au cours d'une étape F300, le terminal T envoie la donnée sensible MDP en clair au nouveau terminal CAM. Le dispositif BX détecte alors au cours d'une étape E400 (similaire à l'étape E400 décrite en référence à la figure 2) la présence de la donnée sensible dans le message envoyé (F300) et détecte ainsi une faille de sécurité au cours d'une étape E500 similaire à l'étape E500 décrite en référence à la figure 2. Sur les figures 3 à 7 nous ne représentons pas l'étape de détection E500 de la faille de sécurité mais nous pouvons considérer qu'elle sensiblement simultanée avec (ou juste après) l'étape E400 de détection de la présence de la donnée sensible MDP.

En parallèle, un terminal malveillant ATT détecte également au cours d'une étape G400 la présence de la donnée sensible MDP dans le message envoyé (F300). Le terminal ATT est un terminal d'un attaquant qui analyse les contenus des messages entre les terminaux du réseau et tente de récupérer la donnée sensible MDP.

Dans ce mode de réalisation, sur détection (E500) de la faille de sécurité, le dispositif met en œuvre une étape de contremesure E700 qui comporte une modification du mot de passe MDP en un nouveau mot de passe MDP' et envoie ce nouveau mot de passe MDP' au terminal PC car il est déjà connecté au dispositif BX et considéré comme un terminal de confiance.

Au cours d'une étape U750, le terminal PC se reconnecte au dispositif BX en utilisant la nouvelle donnée sensible MDP'.

Au cours d'une étape F450, le nouveau terminal CAM essaie de se connecter au dispositif BX en utilisant l'ancien mot de passe MDP qu'il a reçu du terminal T. Le dispositif BX lui envoie au cours d'une étape E800a un refus de la demande de connexion, car il n'a pas utilisé le bon mot de passe. De même, le terminal attaquant ATT envoie au cours d'une étape G450 une demande de connexion au dispositif BX en utilisant l'ancien mot de passe MDP qu'il a intercepté (G400), mais le dispositif BX refuse sa demande au cours d'une étape E800b. Ainsi, le terminal attaquant ne réussit pas à se connecter à la passerelle BX. Le terminal attaquant peut déduire que la donnée MDP n'est pas un mot de passe valable pour se connecter au dispositif BX, supposer que les terminaux T et CAM ne détiennent pas le mot de passe et ne plus analyser les messages qu'ils émettent.

Le dispositif BX peut ne pas envoyer le nouveau mot de passe MDP' au terminal T car il a déjà divulgué l'ancien mot de passe MDP. Alternativement, le dispositif BX peut envoyer le nouveau mot de passe MDP' au terminal T avec une demande de configuration pour que ce dernier ne le diffuse pas ou ne le diffuse qu'après un chiffrement.

La **figure** 4 est un organigramme représentant des étapes d'un procédé de détection proposé, mis en œuvre selon un autre mode de réalisation particulier, suivies par des étapes de contremesure contre une faille de sécurité FS détectée. Le procédé de détection est mis en œuvre par le dispositif (passerelle) BX décrit en référence aux figures 1 et 2. Nous supposons ici que le dispositif BX a déjà mis en œuvre les étapes de surveillance E100 et de détection E200.

Au cours d'une étape F300, le terminal T envoie la donnée sensible MDP en clair au nouveau terminal CAM. Le dispositif BX détecte alors au cours d'une étape E400 (similaire aux étapes E400 décrites en référence aux figures 2 et 3) la présence de la donnée sensible MDP dans le message envoyé F300. En parallèle, le terminal malveillant ATT détecte également au cours d'une étape G400 la présence de la donnée sensible MDP dans le message (F300).

Le nouveau terminal CAM et le terminal malveillant ATT envoient des demandes de connexion au dispositif BX en utilisant le mot de passe MDP au cours des étapes F450 et G450 respectivement.

Dans ce mode de réalisation, le dispositif BX active un compteur à rebours temporel d'une durée Y à compter de la détection E400, dans laquelle il ne répond pas aux demandes de connexion. A l'expiration de la durée Y, le dispositif BX envoie au cours d'une étape E600 (similaire à l'étape E600 décrite en référence à la figure 2) une notification au terminal PC considéré de confiance, pour avertir un utilisateur du terminal PC de la faille de sécurité FS et des identifiants des terminaux CAM et TTA qui ont essayé de se connecter au dispositif BX.

L'utilisateur du terminal PC examine les identifiants de ces terminaux CAM et ATT et détermine s'ils sont des terminaux connus ou susceptibles d'être des terminaux malveillants. Au cours d'une étape U600, le terminal de confiance PC envoie une confirmation de la présence d'une attaque de la donnée sensible MDP ou une commande pour accepter les connexions des terminaux CAM et ATT. Supposant que le terminal PC confirme au cours de l'étape U600 la présence d'une tentative d'attaque, le dispositif BX rejette au cours des étapes de contremesure E700a et E700b les demandes de connexion de tous les terminaux qui ont demandé une connexion pendant l'intervalle Y, soient les terminaux CAM et ATT.

Alternativement, le terminal PC peut spécifier au dispositif BX pour quel terminal (CAM) le dispositif BX doit accepter la demande de connexion, et pour quel terminal (ATT) le dispositif BX doit refuser la demande de connexion.

Selon une variante du mode de réalisation décrit par la figure 4, le dispositif BX envoie (E600) au terminal PC une notification sur la présence de la faille de sécurité FS dès qu'il détecte (E400) la présence de la donnée sensible MDP dans un message (F300). L'utilisateur du terminal PC détermine lui-même les identifiants des terminaux qui tentent de se connecter au dispositif BX.

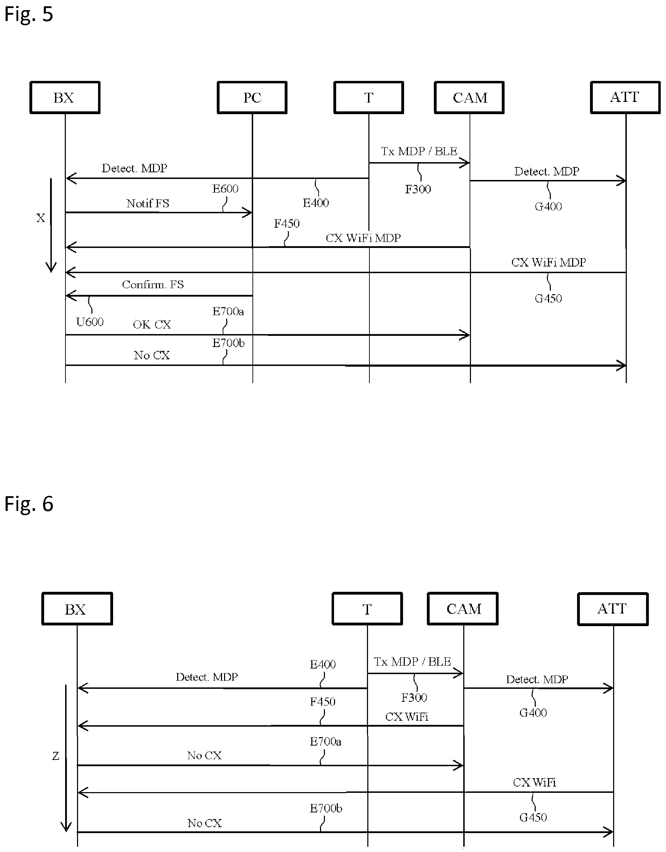

Dans un autre mode de réalisation représenté par la **figure 5****,** le dispositif BX active un compteur à rebours temporel d'une durée X à compter de la détection E400. Si au bout de cette durée X, le dispositif BX reçoit une confirmation (U600) en provenance du terminal PC sur la présence d'une éventuelle attaque, le dispositif BX accepte au cours d'une étape de contremesure E700a, uniquement la première demande de connexion qu'il a reçue pendant la durée X (soit la demande du terminal CAM) et refuse, au cours d'une étape de contremesure E700b, les demandes ultérieures (soit la demande du terminal ATT). En recevant le refus de sa demande de connexion, le terminal attaquant ATT peut considérer que le mot de passe MDP n'est pas correct.

Dans un autre mode de réalisation représenté par la **figure 6****,** le dispositif BX active un compteur à rebours temporel d'une durée Z à compter de la détection E400 et refuse au cours des étapes de contremesure E700a et E700b toutes les demandes de connexion reçues durant l'intervalle de temps Z.

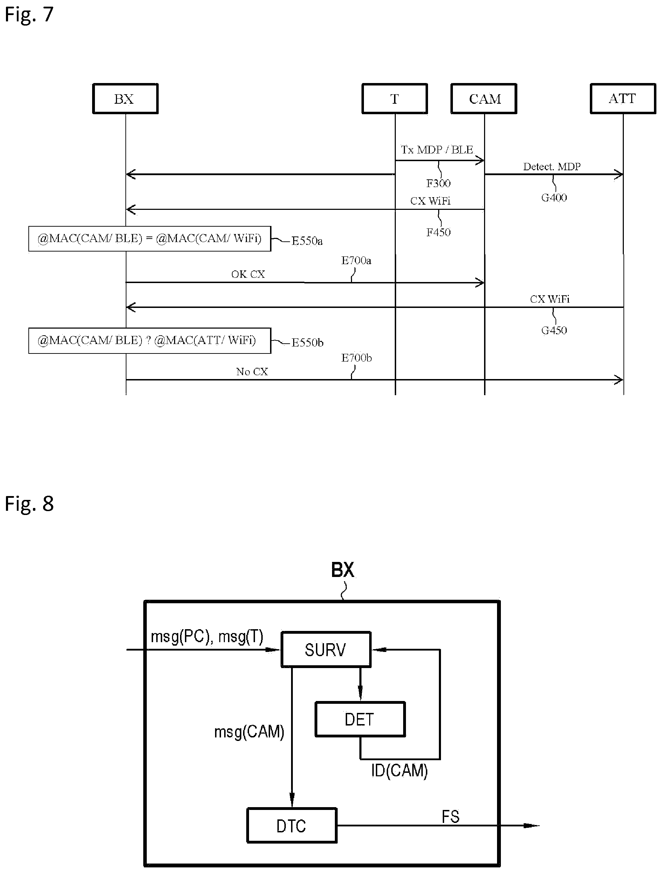

Dans un autre mode de réalisation représenté par la **figure 7****,** lorsque le dispositif BX détecte (E400) la présence de la donnée sensible MDP dans un message analysé (F300), il mémorise au cours de cette étape E400 un identifiant du nouveau terminal CAM, par exemple son adresse physique MAC utilisée lors de l'envoi du message F300 selon la norme Bluetooth.

Lorsque le dispositif BX reçoit une demande de connexion (F450, G450) d'un terminal, il vérifie au cours d'une étape E550a, E550b si l'adresse MAC utilisée pour la demande de connexion correspond à l'adresse MAC mémorisée au cours de l'étape E400. Ainsi, dans cet exemple, le dispositif BX vérifie au cours de l'étape E550a que l'adresse MAC du nouveau terminal CAM en WiFi est la même que l'adresse mémorisée et accepte alors au cours d'une étape de contremesure E700a sa demande de connexion F450. Le dispositif BX vérifie au cours de l'étape E550b que l'adresse MAC du terminal ATT en WiFi est différente de l'adresse mémorisée et refuse alors au cours d'une étape de contremesure E700b sa demande de connexion G450.

Ce mode est particulièrement avantageux lorsque le nouveau terminal CAM utilise la même adresse physique MAC pour ses échanges selon le protocole Bluetooth ainsi que pour les échanges selon le protocole WiFi. Cela est possible notamment lorsque le nouveau terminal CAM dispose d'une même puce ou circuit intégré pour les communications Bluetooth et WiFi.

Dans les modes décrits ici, la donnée sensible est un mot de passe de connexion au dispositif BX. Des données sensibles d'autres natures sont envisageables telles que des informations personnelles de l'utilisateur du dispositif BX et/ou du terminal PC.

Dans les modes décrits ici, le dispositif BX n'analyse que les messages destinés au terminal CAM car il est un nouveau terminal. Alternativement, le dispositif BX peut analyser tous les messages quelles que soient leurs destinations. Dans ce cas, le dispositif BX ne met pas en œuvre les étapes de surveillance E100 et de détection E200.

La **figure** 8 représente une architecture fonctionnelle, selon un mode de réalisation particulier, du dispositif BX de détection d'une faille de sécurité. Le dispositif BX détient au moins une donnée sensible MDP.

Le dispositif BX comprend :
- un module d'analyse SURV configuré pour analyser les messages envoyés par le premier terminal T connu par le dispositif BX à un autre terminal CAM ; et
- un module de détection de failles DTC configuré pour détecter une faille de sécurité s'il détecte la présence de la donnée sensible MDP dans un message analysé.

Dans les modes de réalisation décrits en référence aux figures 1 à 7, le dispositif de détection BX comporte en outre :
- un module de surveillance SURV configuré pour surveiller les destinations des messages envoyés par le premier terminal T ; et
- un module de détection de nouveaux terminaux DET configuré pour détecter que la destination d'un message envoyé est un terminal CAM non connu par le dispositif (un nouveau terminal) ;
ledit module d'analyse SURV étant configuré pour n'analyser que les messages envoyés au nouveau terminal CAM, sur ladite détection.

En particulier et tel que représenté sur la figure 8, les modules de surveillance et d'analyse peuvent former un seul module (SURV).

Dans un mode de réalisation, le dispositif BX comporte en outre un module de contremesure (non représenté sur la figure 8) configuré pour mettre en œuvre une étape (E700) de contremesure à la faille de sécurité détectée FS, par exemple tel que décrit en référence aux figures 3 à 7.

Dans les modes décrits ici, le dispositif de détection est une passerelle BX. Des dispositifs d'autres natures sont envisageables tels qu'un serveur de données sensibles ou un équipement d'utilisateur ou un extendeur de couverture d'un réseau de communication.

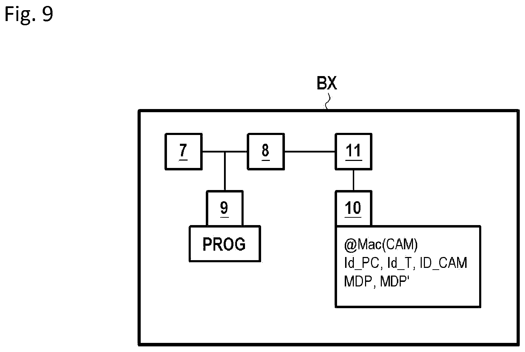

Dans les modes de réalisation décrits ici, le dispositif de détection BX a l'architecture matérielle d'un ordinateur, telle qu'illustrée à la **figure 9****.**

L'architecture du dispositif de détection BX comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du dispositif de détection BX selon l'invention constitue un support d'enregistrement conforme à l'invention, lisible par le processeur 7 et sur lequel est enregistré ici un programme d'ordinateur PROG conforme à l'invention.

La mémoire 10 du dispositif de détection BX permet d'enregistrer des variables utilisées pour l'exécution des étapes du procédé de détection selon l'invention, telles que l'adresse MAC de la caméra CAM, des identifiants Id_PC, Id_T, Id_CAM des terminaux PC, T et CAM respectivement, et les données sensibles MDP et MDP'.

Le programme d'ordinateur PROG définit des modules fonctionnels et logiciels ici, configurés pour détecter une faille de sécurité et éventuellement effectuer une contremesure à la faille détectée. Ces modules fonctionnels s'appuient sur et/ou commandent les éléments matériels 7-11 du dispositif de détection BX cités précédemment.

## Revendications

1. Procédé de détection d'une faille de sécurité (FS) permettant de récupérer une donnée sensible (MDP), ledit procédé étant mis en œuvre par un dispositif de type passerelle de réseau (BX) détenant ladite donnée sensible, ladite donnée sensible (MDP) permettant à un terminal du réseau administré par le dispositif, de se connecter audit dispositif (BX), ledit procédé comprenant des étapes de:
- analyse (E300) des messages envoyés via ledit dispositif, par au moins un premier terminal (T) du réseau, dit terminal connu par ledit dispositif, à un autre terminal (CAM);
- détection (E500) d'une dite faille de sécurité (FS) sur détection (E400) de la présence de ladite donnée sensible (MDP) dans un des messages analysés.

2. Procédé selon la revendication 1 comprenant en outre:
- une étape de surveillance (E100) des destinations des messages envoyés par ledit au moins un premier terminal (T) ;
- une étape de détection (E200) que la destination d'un dit message envoyé est un terminal non connu par ledit dispositif, dit nouveau terminal (CAM) ;
ladite étape d'analyse (E300) des messages étant mise en œuvre uniquement pour les messages envoyés audit nouveau terminal (CAM).

3. Procédé selon l'une des revendications 1 ou 2 dans lequel ladite étape d'analyse (E300) est mise en œuvre pendant une première durée déterminée comptée à partir de la détection du premier message émis par le premier terminal à l'autre terminal.

4. Procédé selon l'une quelconque des revendications 1 ou 2 comportant en outre une détermination (E210) d'au moins une caractéristique dudit autre terminal parmi :
- un fabriquant ;
- un identifiant unique UUID d'un service utilisé par ledit autre terminal ; et
- un préfixe d'un nom dudit autre terminal ;
ladite étape d'analyse (E300) étant conditionnée par une dite caractéristique dudit autre terminal.

5. Procédé selon l'une quelconque des revendications 2 à 4 dans lequel ladite étape de surveillance (E100) comporte une écoute de canaux de type "advertising" selon la norme Bluetooth.

6. Procédé selon l'une quelconque des revendications 2 à 5 dans lequel ladite étape de détection (E200) comporte une détection d'une caractéristique dudit nouveau terminal parmi une adresse MAC, un algorithme de changement de fréquence et une force d'émission par ledit nouveau terminal.

7. Procédé selon l'une quelconque des revendications 1 à 6 comportant en outre, sur détection (E500) de ladite faille de sécurité, une étape de notification (E600) à un utilisateur dudit dispositif de la faille de sécurité (FS) détectée et d'un identifiant dudit autre terminal (CAM).

8. Procédé selon l'une quelconque des revendications 1 à 7 comportant en outre, sur détection (E500) de ladite faille de sécurité, au moins une étape de contremesure (E700) pouvant être choisie parmi:
- une modification de la valeur de ladite donnée sensible (MDP) ;
- un désappairage des terminaux qui se sont connectés audit dispositif (BX) pendant une durée déterminée (Y) suivant la détection (E500) de la faille de sécurité ;
- un blocage de connexion avec ledit dispositif (BX) de tout terminal pendant une durée déterminée (Z) suivant la détection (E500) de la faille de sécurité;
- un maintien de connexion seulement pour le terminal qui s'est connecté en premier lieu audit dispositif (BX) après la détection (E500) de la faille de sécurité; et
- un maintien de connexion seulement pour un terminal qui s'est connecté audit dispositif (BX) pendant une durée déterminée (X) après la détection (E500) de la faille de sécurité et qui a une adresse MAC identique à l'adresse MAC dudit autre terminal (CAM).

9. Procédé selon l'une quelconque des revendications 2 à 8 comportant en outre, en absence de détection d'une dite faille de sécurité, une étape d'enregistrement (E410) d'un identifiant dudit nouveau terminal dans une mémoire comportant des identifiants de terminaux connus par ledit dispositif (BX).

10. Programme d'ordinateur (PROG) comportant des instructions pour l'exécution des étapes d'un procédé de détection d'une faille de sécurité selon l'une quelconque des revendications 1 à 9 lorsque ledit programme est exécuté par un ordinateur.

11. Support d'enregistrement (7) lisible par un ordinateur sur lequel est enregistré un programme d'ordinateur selon la revendication 10.

12. Dispositif de détection d'une faille de sécurité (FS) permettant de récupérer une donnée sensible (MDP), ledit dispositif (BX) de type passerelle de réseau détenant ladite donnée sensible, ladite donnée sensible (MDP) permettant à un terminal du réseau administré par le dispositif de se connecter audit dispositif (BX), le dispositif comprenant :
- un module d'analyse (SURV) configuré pour analyser les messages envoyés, via ledit dispositif, par au moins un premier terminal (T) du réseau administré par le dispositif, dit terminal connu par ledit dispositif, à un autre terminal (CAM) ; et
- un module de détection d'une faille (DTC) configuré pour détecter une dite faille de sécurité sur détection de la présence de ladite donnée sensible (MDP) dans des messages analysés.

13. Dispositif selon la revendication 12 comportant en outre :
- un module de surveillance (SURV) configuré pour surveiller les destinations des messages envoyés par ledit au moins un premier terminal (T) ; et
- un module de détection de nouveaux terminaux (DET) configuré pour détecter que la destination d'un dit message envoyé est un terminal non connu par ledit dispositif, dit nouveau terminal (CAM) ;
ledit module d'analyse (SURV) étant configuré pour n'analyser que les messages envoyés audit nouveau terminal (CAM), sur ladite détection.

14. Equipement comportant un dispositif selon l'une des revendications 12 ou 13 dans lequel ledit équipement est un équipement de terminaison de réseau (BX), un extendeur de couverture d'un réseau de communication sans fil, un serveur de données sensibles, ou un équipement d'un utilisateur

## Patentansprüche

1. Verfahren zur Erkennung einer Sicherheitslücke (FS), die es ermöglicht, ein sensibles Datenobjekt (MDP) zu erlangen, wobei das Verfahren von einer Vorrichtung vom Typ Netzgateway (BX) durchgeführt wird, die das sensible Datenobjekt besitzt, wobei das sensible Datenobjekt (MDP) es einem Endgerät des von der Vorrichtung verwalteten Netzes ermöglicht, sich mit der Vorrichtung (BX) zu verbinden, wobei das Verfahren die folgenden Schritte umfasst:
- Analysieren (E300) der Nachrichten, die über die Vorrichtung von mindestens einem ersten Endgerät (T) des Netzes, das als der Vorrichtung bekanntes Endgerät bezeichnet wird, an ein anderes Endgerät (CAM) gesendet werden;
- Erkennen (E500) einer solchen Sicherheitslücke (FS) beim Erkennen (E400) des Vorhandenseins des sensiblen Datenobjekts (MDP) in einer der analysierten Nachrichten.

2. Verfahren nach Anspruch 1, umfassend ferner:
- einen Schritt des Überwachens (E100) der Ziele der Nachrichten, die von dem mindestens einen ersten Endgerät (T) gesendet werden;
- einen Schritt des Erkennens (E200), dass das Ziel einer solchen gesendeten Nachricht ein der Vorrichtung nicht bekanntes Endgerät ist, das als neues Endgerät (CAM) bezeichnet wird;
wobei der Schritt des Analysierens (E300) der Nachrichten nur für die Nachrichten durchgeführt wird, die an das neue Endgerät (CAM) gesendet werden.

3. Verfahren nach einem der Ansprüche 1 oder 2, wobei der Schritt des Analysierens (E300) während einer ersten bestimmten Dauer durchgeführt wird, die ab der Erkennung der ersten von dem ersten Endgerät an das andere Endgerät gesendeten Nachricht gezählt wird.

4. Verfahren nach einem der Ansprüche 1 oder 2, umfassend ferner ein Bestimmen (E210) mindestens eines Merkmals des anderen Endgeräts unter:
- einem Hersteller;
- einer einmaligen Kennung UUID eines von dem anderen Endgerät genutzten Dienstes; und
- einem Präfix eines Namens des anderen Endgeräts; wobei der Schritt des Analysierens (E300) durch ein solches Merkmal des anderen Endgeräts bedingt ist.

5. Verfahren nach einem der Ansprüche 2 bis 4, wobei der Schritt des Überwachens (E100) ein Abhören von Kanälen vom Typ "Advertising" nach dem Bluetooth-Standard umfasst.

6. Verfahren nach einem der Ansprüche 2 bis 5, wobei der Schritt des Erkennens (E200) ein Erkennen eines Merkmals des neuen Endgeräts unter einer MAC-Adresse, einem Frequenzwechselalgorithmus und einer Sendestärke durch das neue Endgerät umfasst.

7. Verfahren nach einem der Ansprüche 1 bis 6, umfassend ferner, beim Erkennen (E500) der Sicherheitslücke, einen Schritt des Benachrichtigens (E600) eines Benutzers der Vorrichtung über die erkannte Sicherheitslücke (FS) und eine Kennung des anderen Endgeräts (CAM).

8. Verfahren nach einem der Ansprüche 1 bis 7, umfassend ferner, beim Erkennen (E500) der Sicherheitslücke, mindestens einen Schritt zur Gegenmaßnahme (E700), der gewählt werden kann unter:
- einer Änderung des Werts des sensiblen Datenobjekts (MDP) ;
- einem Entkoppeln der Endgeräte, die sich mit der Vorrichtung (BX) verbunden haben, während einer bestimmten Dauer (Y) nach dem Erkennen (E500) der Sicherheitslücke;
- einem Blockieren einer Verbindung jedes Endgeräts mit der Vorrichtung (BX) während einer bestimmten Dauer (Z) nach dem Erkennen (E500) der Sicherheitslücke;
- einem Beibehalten der Verbindung nur für das Endgerät, das sich nach dem Erkennen (E500) der Sicherheitslücke als Erstes mit der Vorrichtung (BX) verbunden hat; und
- einem Beibehalten der Verbindung nur für ein Endgerät, das sich mit der Vorrichtung (BX) während einer bestimmten Dauer (X) nach dem Erkennen (E500) der Sicherheitslücke verbunden hat und das eine MAC-Adresse hat, die identisch mit der MAC-Adresse des anderen Endgeräts (CAM) ist.

9. Verfahren nach einem der Ansprüche 2 bis 8, umfassend ferner, bei Nichterkennen einer solchen Sicherheitslücke, einen Schritt des Speicherns (E410) einer Kennung des neuen Endgeräts in einem Speicher, der Kennungen von der Vorrichtung (BX) bekannten Endgeräten umfasst.

10. Computerprogramm (PROG), das Anweisungen umfasst, die bei der Ausführung des Programms durch einen Computer die Schritte eines Verfahrens zur Erkennung einer Sicherheitslücke nach einem der Ansprüche 1 bis 9 ausführen.

11. Computerlesbares Speichermedium (7), auf dem ein Computerprogramm nach Anspruch 10 gespeichert ist.

12. Vorrichtung zur Erkennung einer Sicherheitslücke (FS), die es ermöglicht, ein sensibles Datenobjekt (MDP) zu erlangen, wobei die Vorrichtung vom Typ Netzgateway (BX) das sensible Datenobjekt besitzt, wobei das sensible Datenobjekt (MDP) es einem Endgerät des von der Vorrichtung verwalteten Netzes ermöglicht, sich mit der Vorrichtung (BX) zu verbinden, wobei die Vorrichtung umfasst:
- ein Analysemodul (SURV), das dazu ausgestaltet ist, die Nachrichten zu analysieren, die über die Vorrichtung von mindestens einem ersten Endgerät (T) des von der Vorrichtung verwalteten Netzes, das als der Vorrichtung bekanntes Endgerät bezeichnet wird, an ein anderes Endgerät (CAM) gesendet werden;
- ein Modul zur Erkennung einer Lücke (DTC), das dazu ausgestaltet ist, eine solche Sicherheitslücke beim Erkennen des Vorhandenseins des sensiblen Datenobjekts (MDP) in analysierten Nachrichten zu erkennen.

13. Verfahren nach Anspruch 12, umfassend ferner:
- ein Überwachungsmodul (SURV), das dazu ausgestaltet ist, die Ziele der Nachrichten zu überwachen, die von dem mindestens einen ersten Endgerät (T) gesendet werden;
- ein Modul zur Erkennung von neuen Endgeräten (DET), das dazu ausgestaltet ist zu erkennen, dass das Ziel einer solchen gesendeten Nachricht ein der Vorrichtung nicht bekanntes Endgerät ist, das als neues Endgerät (CAM) bezeichnet wird;
wobei das Analysemodul (SURV) dazu ausgestaltet ist, bei der Erkennung nur die an das neue Endgerät (CAM) gesendeten Nachrichten zu analysieren.

14. Einrichtung, die eine Vorrichtung nach einem der Ansprüche 12 oder 13 umfasst, wobei die Einrichtung eine Netzabschlusseinrichtung (BX), ein Reichweitenerweiterer eines drahtlosen Kommunikationsnetzes, ein Server für sensible Daten oder eine Einrichtung eines Benutzers ist

## Claims

1. Method for detecting a security breach (FS) allowing sensitive data (MDP) to be recovered, said method being implemented by a device of the network gateway type (BX) holding said sensitive data, said sensitive data (MDP) allowing a terminal of the network managed by the device to connect to said device (BX), said method comprising steps for:
- analysing (E300) messages sent, via said device, by at least a first terminal (T) of the network, referred to as terminal known by said device, to another terminal (CAM) ;
- detecting (E500) a said security breach (FS) upon detection (E400) of the presence of said sensitive data (MDP) in one of the analysed messages.

2. Method according to Claim 1, furthermore comprising:
- a step (E100) for monitoring the destinations of the messages sent by said at least a first terminal (T);
- a step (E200) for detecting that the destination of a said message sent is a terminal not known by said device, referred to as new terminal (CAM);
said step (E300) for analysing the messages being implemented only for the messages sent to said new terminal (CAM).

3. Method according to either of Claims 1 and 2, in which said analysis step (E300) is implemented for a given first duration starting from the detection of the first message sent by the first terminal to the other terminal.

4. Method according to either one of Claims 1 and 2, furthermore comprising a determination (E210) of at least one characteristic of said other terminal from amongst:
- a manufacturer;
- a unique identifier UUID of a service used by said other terminal; and
- a prefix of a name of said other terminal;
said analysis step (E300) being conditioned by a said characteristic of said other terminal.

5. Method according to any one of Claims 2 to 4, in which said monitoring step (E100) comprises an eavesdropping on channels of the "advertising" type according to the Bluetooth standard.

6. Method according to any one of Claims 2 to 5, in which said detection step (E200) comprises a detection of a characteristic of said new terminal from amongst a MAC address, a frequency change algorithm and a strength of transmission by said new terminal.

7. Method according to any one of Claims 1 to 6, furthermore comprising, upon detection (E500) of said security breach, a step (E600) for notifying a user of said device of the detected security breach (FS) and of an identifier of said other terminal (CAM).

8. Method according to any one of Claims 1 to 7, furthermore comprising, upon detection (E500) of said security breach, at least one countermeasure step (E700) which may be chosen from amongst:
- a modification of the value of said sensitive data (MDP) ;
- an unpairing of the terminals which have connected to said device (BX) for a given duration (Y) following the detection (E500) of the security breach;
- a blocking from connection with said device (BX) of any terminal for a given duration (Z) following the detection (E500) of the security breach;
- a maintaining of connection only for the terminal which has connected in the first place to said device (BX) after the detection (E500) of the security breach; and
- a maintaining of connection only for a terminal which has connected to said device (BX) for a given duration (X) after the detection (E500) of the security breach and which has a MAC address identical to the MAC address of said other terminal (CAM).

9. Method according to any one of Claims 2 to 8, furthermore comprising, in the absence of a detection of a said security breach, a step (E410) for storing an identifier of said new terminal in a memory comprising identifiers of terminals known by said device (BX).

10. Computer program (PROG) comprising instructions for the execution of the steps of a method for detecting a security breach according to any one of Claims 1 to 9, when said program is executed by a computer.

11. Recording medium (7) readable by a computer on which a computer program according to Claim 10 is recorded.

12. Device for detecting a security breach (FS) allowing sensitive data (MDP) to be recovered, said device (BX) of the network gateway type holding said sensitive data, said sensitive data (MDP) allowing a terminal of the network managed by the device to connect to said device (BX), the device comprising:
- an analysis module (SURV) configured for analysing the messages sent, via said device, by at least a first terminal (T) of the network managed by the device, said terminal being known by said device, to another terminal (CAM); and
- a module for detecting a breach (DTC) configured for detecting a said security breach upon detection of the presence of said sensitive data (MDP) in analysed messages.

13. Device according to Claim 12, furthermore comprising:
- a monitoring module (SURV) configured for monitoring the destinations of the messages sent by said at least a first terminal (T); and
- a module for detecting new terminals (DET) configured for detecting that the destination of a said message sent is a terminal not known by said device, referred to as new terminal (CAM);
said analysis module (SURV) being configured for only analysing the messages sent to said new terminal (CAM), upon said detection.

14. Equipment comprising a device according to either of Claims 12 and 13, in which said equipment is network termination equipment (BX), an extender of coverage of a wireless communications network, a server for sensitive data, or user equipment.
